(19) Europäisches Patentamt
European Patent Office
Office européen des brevets

(11) **EP 2 757 358 A2**

(12) **DEMANDE DE BREVET EUROPEEN**

(43) Date de publication:
**23.07.2014 Bulletin 2014/30**

(21) Numéro de dépôt: **14000173.6**

(22) Date de dépôt: **17.01.2014**

(51) Int Cl.:
*G01L 5/22* (2006.01)     *B62M 6/50* (2010.01)
*G01L 3/24* (2006.01)     *B60B 27/00* (2006.01)
*G01L 3/10* (2006.01)     *G01L 3/14* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **18.01.2013 FR 1300114**

(71) Demandeur: **MAVIC S.A.S.**
**74370 Metz-Tessy (FR)**

(72) Inventeurs:
• **Mercat, Jean-Pierre**
**74650 Chavanod (FR)**
• **Neyroud, Christophe**
**74960 Cran Gevrier (FR)**

(74) Mandataire: **Rambaud, Pascal**
**Salomon S.A.S.**
**D.J.P.I.**
**74996 Annecy Cedex 9 (FR)**

(54) **Moyeu de mesure de couple, système de mesure de puissance, roue de cycle équipée d'un tel moyeu ou d'un tel système et méthode de mesure au moyen d'un tel moyeu**

(57)     Ce moyeu (2) de mesure du couple d'entrainement d'une roue de cycle, comprend :
- un arbre central (10) définissant un axe de rotation (X) de la roue,
- un corps de moyeu (20) monté libre en rotation autour de l'arbre (10),
le corps de moyeu (20) comportant une partie centrale (20.2) bordée de part et d'autre par un flasque (20.1, 20.2) comportant des moyens (23) de fixation d'au moins un élément de liaison reliant le corps de moyeu (20) à une jante de la roue, Le moyeu comprend un système de mesure (60) du couple d'entrainement de la roue incluant des jauges de déformation (6.1, 6.2) fixées sur le corps de moyeu (20).

Fig.2

EP 2 757 358 A2

## Description

La présente invention concerne un moyeu pour la mesure du couple d'une roue de cycle, ainsi qu'une roue de cycle équipée d'un tel moyeu de mesure de couple. La présente invention concerne également un système pour la mesure de la puissance d'une roue de cycle, ainsi qu'une roue de cycle équipée d'un tel système. Enfin, l'invention concerne une méthode de mesure, au moyen d'un tel moyeu ou d'un tel système.

La mesure du couple et de la puissance motrice d'une roue de cycle présente un intérêt dans de nombreux cas, par exemple pour évaluer la performance d'un cycliste au cours d'un entraînement. La puissance développée par le cycliste peut être obtenue en multipliant la vitesse du cycle par la force motrice, transmise par le cycliste à la roue motrice. Cependant, la mesure de cette force est relativement complexe et, dans le cadre de la présente invention, la puissance est obtenue en multipliant le couple d'entrainement, transmis par le cycliste à la roue motrice, par la vitesse angulaire de cette roue.

EP-A-0 841 549 divulgue un moyeu pour la mesure de la puissance d'une roue de cycle. Ce moyeu est équipé de deux systèmes de mesure de sa position angulaire, comportant chacun une came pourvue de dents espacées angulairement de manière régulière. Deux rupteurs sont pourvus chacun d'une lamelle métallique en prise avec les dents de l'une des cames. Le couple d'entrainement transmis par le cycliste à la roue est obtenu en comparant le décalage temporel entre les mesures de chaque rupteur. Pour calculer la puissance, le couple d'entrainement est multiplié par la vitesse angulaire de la roue, obtenue au moyen des rupteurs. Un tel système de mesure intègre un grand nombre de pièces mobiles, ce qui le rend relativement coûteux et compliqué à fabriquer, et génère des imprécisions de mesure.

EP-A-1 082 592 divulgue un moyeu bi-partite pour la mesure de la puissance d'une roue de cycle. Une partie menante du moyeu, mobile en rotation autour d'un axe fixe de la roue, est entrainée en rotation par le cycliste qui pédale, par l'intermédiaire d'un dispositif de roue-libre. La partie menante est logée à l'intérieur d'une partie menée du moyeu. Les parties menantes et menées sont séparées radialement par des roulements à bille. Un élément de liaison qui supporte des jauges de déformation est fixé à la fols à la partie menante et à la partie menée du moyeu. Ainsi, en service, l'élément de liaison transmet à la partie menée le couple d'entrainement fourni par le cycliste et se déforme. La déformation de l'élément de liaison est mesurée par la jauge de déformation et permet d'obtenir une mesure du couple d'entrainement fourni par le cycliste. Par ailleurs, un capteur mesure la vitesse angulaire de la roue motrice, ce qui permet d'obtenir une mesure de la puissance développée par le cycliste, en multipliant le couple d'entrainement par la vitesse angulaire. Un tel dispositif est lourd et encombrant, car il nécessite la présence de deux parties de moyeu concentriques isolées mutuellement en rotation par un gros roulement à billes alourdissant le système ou dans un autre mode de réalisation par un palier thermoplastique Introduisant du frottement et une hystérèse dans la mesure du couple dégradant notablement la précision de mesure, ce dispositif nécessite aussi un élément de liaison relativement massif formant le corps d'épreuve supportant les jauges de déformation. D'autre part, les différentes jauges sont collées à des endroits différents de l'élément de liaison et elles doivent être reliées les unes aux autres par des fils également collés sur l'élément de liaison. La fixation de composants distincts sur l'élément de liaison pose des problèmes de qualité de fabrication et de fiabilité électronique.

C'est à ces inconvénients qu'entend plus particulièrement remédier l'invention en proposant un moyeu léger et compact pour la mesure de la puissance d'une roue de cycle. L'invention vise également à proposer un moyeu de grande qualité et avec une fiabilité améliorée pour un coût modéré.

A cet effet, l'invention a pour objet un moyeu de mesure du couple d'entrainement d'une roue de cycle, comprenant ;

- un arbre central définissant un axe de rotation de la roue,
- un corps de moyeu monté libre en rotation autour de l'arbre.

Le corps de moyeu comportant une partie centrale bordée de part et d'autre par des zones d'ancrage de moyens de fixation d'au moins un élément de liaison reliant le corps de moyeu à une jante de la roue.

Conformément à l'invention, le moyeu comprend un système de mesure du couple d'entrainement de la roue incluant des jauges de déformation fixées sur le corps de, moyeu.

Avantageusement, les jauges de déformation sont situées sur la partie centrale du corps de moyeu, entre les deux zones d'ancrage des moyens de fixation des éléments de liaison qui relient le corps de moyeu à la jante.

Avantageusement, le moyeu est principalement monobloc, c'est-à-dire que, au moins la zone d'ancrage située du côté opposé de la roue libre est fait d'une seule pièce avec la partie centrale du corps de moyeu.

Grâce à l'invention, la mesure du couple d'entrainement de la roue est obtenue au moyen de jauges de déformation fixées directement sur le corps de moyeu, qui est principalement monobloc. Ainsi, le moyeu n'intègre pas de pièces mobiles ou de pièces supplémentaires spécialement dédiées à l'implantation des jauges de déformation. Le moyeu conforme à l'invention est léger, peu coûteux à fabriquer et réalise des mesures fiables avec une hystérèse négligeable.

Selon des aspects avantageux mais non obligatoires de l'invention, un tel moyeu de mesure de puissance peut incorporer une ou plusieurs des caractéristiques suivantes, prises dans toute combinaison techniquement admissible :

- Les jauges de déformation sont fixées sur la partie centrale du corps de moyeu.
- La partie centrale du corps de moyeu a une section transversale globalement symétrique par rapport à deux plans longitudinaux perpendiculaires. Ainsi la mesure du pont de jauges est indépendante des moments de flexion et de l'effort normal.
- Au moins deux jauges de déformation sont décalées angulairement de 180° par rapport à l'axe.
- La partie centrale du corps de moyeu présente une section transversale globalement rectangulaire.
- Les deux jauges de déformation sont fixées sur les faces de petite dimension de la partie centrale du corps de moyeu.
- Le moyeu comporte un élément de protection tubulaire disposé entre les flasques, autour de la partie centrale du corps de moyeu, et délimitant un volume de réception du système de mesure.
- La partie centrale du corps de moyeu est creuse et délimite un volume de réception du système de mesure.
- Les jauges de déformation sont fixées sur la surface Intérieure de la partie centrale du corps de moyeu.
- Le corps de moyeu ne comporte pas de partie mobile.
- Les éléments de liaison reliant le corps de moyeu à la jante sont des rayons dont la distance à l'axe de la roue est telle que le ratio de la distance à l'axe des rayons de la nappe côté roue libre sur la distance à l'axe des rayons de la nappe opposée roue libre est inférieur à 65%.

L'invention concerne également un système de mesure de la puissance d'entrainement d'une roue de cycle, caractérisé en ce qu'il comprend un tel moyeu de mesure de couple équipé d'un organe de mesure de la vitesse angulaire du corps de moyeu par rapport à l'arbre central.

L'invention concerne également une roue de cycle, caractérisée en ce qu'elle comprend un tel moyeu ou un tel système de mesure de puissance.

L'invention concerne également une méthode de mesure au moyen d'un tel moyeu ou d'un tel système, caractérisée en ce qu'elle comprend une étape d'étalonnage préalable à l'utilisation du cycle, dans laquelle une série de tests est effectuée à l'aide d'un générateur de couple entrainant le moyeu, la jante étant Immobilisée, afin d'obtenir une relation entre les signaux de sortie des jauges de déformation et le couple d'entrainement de la roue.

Selon des aspects avantageux mais non obligatoires de l'invention, une telle méthode peut incorporer une ou plusieurs des caractéristiques suivantes, prises dans toute combinaison techniquement admissible :

- Lors de l'étalonnage, le moyeu est assemblé à la jante et un pneumatique gonflé est monté sur la jante.
- Le moyeu est équipé d'un capteur de température et, lors de l'étalonnage, une série de tests est effectuée afin d'établir une relation entre les variations de température et la mesure du pont de jauges afin de corriger la loi de détermination ducouple d'entrainement de la roue en fonction du signal électrique du pont de jauges mais aussi de la température.

L'invention sera mieux comprise à la lumière de la description qui va suivre d'un moyeu de mesure de puissance conforme à l'invention, donnée uniquement à titre d'exemple et faite en référence aux dessins annexés dans lesquels :

- la figure 1 est une vue en perspective d'une roue de cycle conforme à l'invention;
- la figure 2 est une vue en perspective éclatée d'un moyeu de mesure de couple conforme à l'invention faisant partie de la roue de cycle de la figure 1 ;
- la figure 3 est une vue en perspective partiellement éclatée du moyeu de la figure 2;
- la figure 4 est une vue selon la flèche F4 à la figure 3, un tube de protection n'étant pas représenté pour la clarté du dessin;
- la figure 5 est une coupe transversale selon le plan P5 à la figure 3 (également coupe V-V de la figure 6);
- la figure 6 est une coupe longitudinale selon le plan P6 à la figure 3;
- la figure 7 est une vue en perspective éclatée d'un moyeu de mesure de couple conforme à un deuxième mode de réalisation de l'invention ;
- la figure 8 est une coupe axiale du moyeu de la figure 7, selon le plan P8 à la figure 7;
- la figure 9 est une coupe transversale selon la ligne IX-IX à la figure 8,
- la figure 10 est une vue schématique montrant la distance existant entre les rayons et l'axe de la roue pour la nappe opposée roue libre,

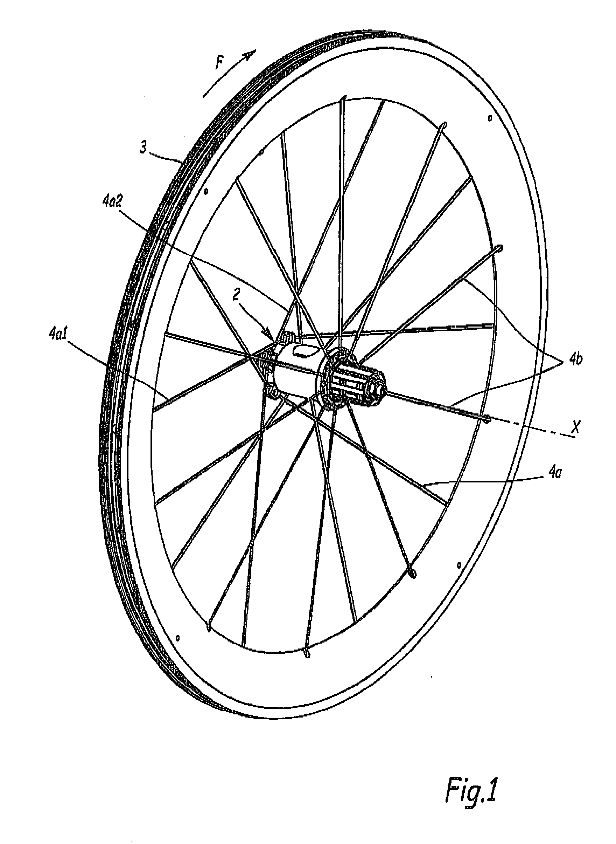

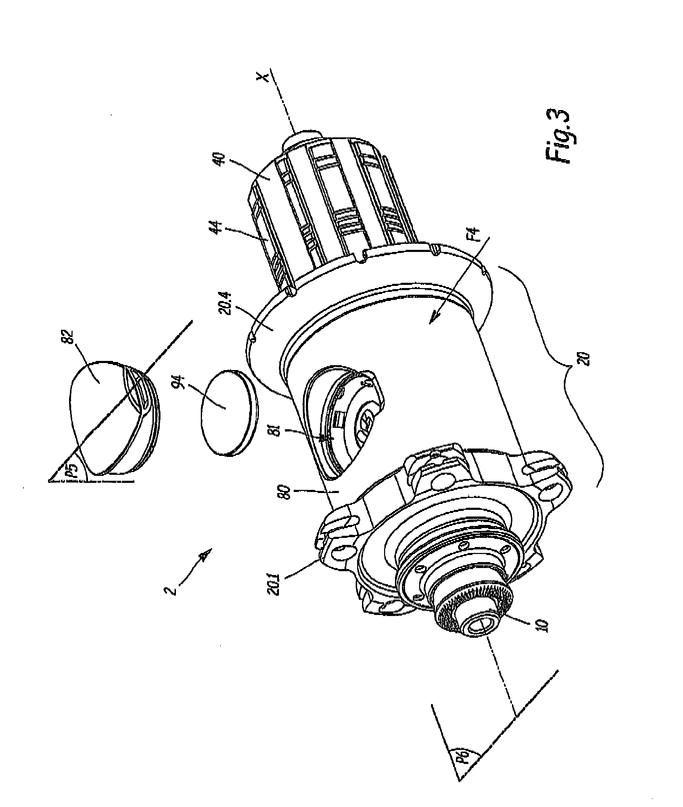

Le moyeu de mesure de couple 2 représenté aux figures 1 à 6 fait partie d'une roue arrière 1 de bicyclette représentée sans son pneumatique à la figure 1. Lorsqu'un cycliste pédale dans le sens d'avancement, il entraine en rotation la roue 1 autour d'un axe de rotation X, dans un sens représenté par les flèches F.

La roue 1 comprend des moyens de liaison du moyeu 2 avec une jante 3, par exemple deux nappes de rayons 4a et 4b. La nappe 4b est dite "nappe coté roue libre" tandis que la nappe 4a est dite "nappe opposée roue libre". La nappe 4a comporte des rayons non tracteurs ou rayons pousseurs 4a2, qui ont tendance à se détendre lorsque le cycliste pédale, ainsi que des rayons tracteurs 4a1 qui ont tendance à se retendre et à tirer sur la jante 3 lorsque le cycliste pédale pour transmettre un couple moteur.

Les rayons 4a1 et 4a2 de la nappe opposée roue libre 4a sont montés de manière croisée. Chaque rayon tracteur 4a2 croise ainsi une seule fois un rayon non tracteur 4a1. Dans un plan perpendiculaire à l'axe X, les rayons 4a1 et 4a2 forment un angle non nul avec une direction purement radiale. La direction des rayons 4a1 et 4a2 comporte ainsi une composante tangentielle.

Les rayons de la nappe côté roue libre 4b sont orientés selon une direction radiale.

Les rayons 4a1 et 4a2 de la nappe opposée roue libre 4a et les rayons de la nappe côté roue libre 4b sont légèrement inclinés par rapport à un plan perpendiculaire à l'axe X, compte tenu de la distance selon l'axe X entre les zones de fixation des nappes 4a et 4b sur le moyeu 2.

L'angle d'orientation (angle de parapluie) de la nappe coté roue libre est plus faible que celui de la nappe opposée roue libre.

L'orientation des rayons 4a1 et 4a2 confère à la nappe coté opposée roue libre 4a une plus grande rigidité en torsion par rapport à la nappe côté roue libre 4b.

Le moyeu 2 comprend un arbre creux 10 s'étendant longitudinalement le long de l'axe X. Cet arbre 10 porte, au niveau d'une première extrémité 12, un embout d'extrémité 19. Au niveau de sa deuxième extrémité filetée 16 opposée à l'extrémité 12, l'arbre 10 porte un écrou 14. L'écrou 14 et l'embout 19 permettent le montage du moyeu 2 et de la roue 1 à laquelle il appartient sur le cadre non représenté d'une bicyclette au moyen d'un tirant à blocage rapide (non représenté) traversant l'arbre creux 10.

Dans la présente description, les termes « axial » et « radial » et leurs dérivés sont définis en référence à l'axe X. Une direction axiale est parallèle à l'axe X, alors qu'une direction radiale est perpendiculaire et sécante à cet axe.

Un corps de moyeu 20 est monté autour de l'arbre 10, avec possibilité de rotation, par rapport à l'arbre 10, autour de l'axe X. Deux paliers à billes 24 et 26 sont intercalés radialement entre l'arbre 10 et le corps 20. Ces paliers 24 et 26 sont disposés respectivement au niveau d'une première extrémité axiale 20A du corps de moyeu 20, tournée du côté de l'embout 19, et au niveau d'une extrémité axiale 20B opposée du corps de moyeu 20, tournée du côté de l'écrou 14. Un écrou 18 retenant le palier à billes 24 est Intercalé axialement entre l'extrémité 201 du corps de moyeu 20 et l'embout d'extrémité 19,

Le corps de moyeu 20 comporte une partie centrale 20.2, bordée de part et d'autre, le long de l'axe X, par des zones d'ancrage de moyens de fixation du moyeu à la jante, par exemple de rayons. Du coté opposé à la roue libre, cette zone d'ancrage est directement constituée par un flasque 20.1 qui se déploie radialement depuis le corps de moyeu et qui reçoit les rayons. Du côté roue libre, la zone d'ancrage est constituée par une partie 20.3 de réception d'un deuxième flasque 20.4. Le flasque 20.1 et la partie 20.3 font partie intégrante du corps de moyeu 20. Par exemple, le corps de moyeu 20 est fabriqué par usinage d'un bloc de métal.

Le flasque 20.4 est assemblé fixement au corps de moyeu 20, par exemple par frettage. Ainsi, le flasque 20.4 est solidaire en rotation et en translation avec le corps de moyeu 20. La partie centrale 20.2 et les flasques 20.1 et 20.4 sont monobloc, ou plus précisément sont monobloc après montage. Autrement dit, après le montage du moyeu 2, la partie centrale 20.2 et les flasques 20.1 et 20.4 sont liés en rotation et en translation. La nappe de rayons 4b est assemblée au flasque 20.4 et relie la jante 3 au flasque 20.4. La nappe de rayons 4a est assemblée au flasque 20.1 et relie la jante 3 au flasque 20.1.

Chaque flasque 20.1 et 20.4 comporte des moyens de fixation des rayons, par exemple des rainures 23 prévues pour loger les extrémités des rayons.

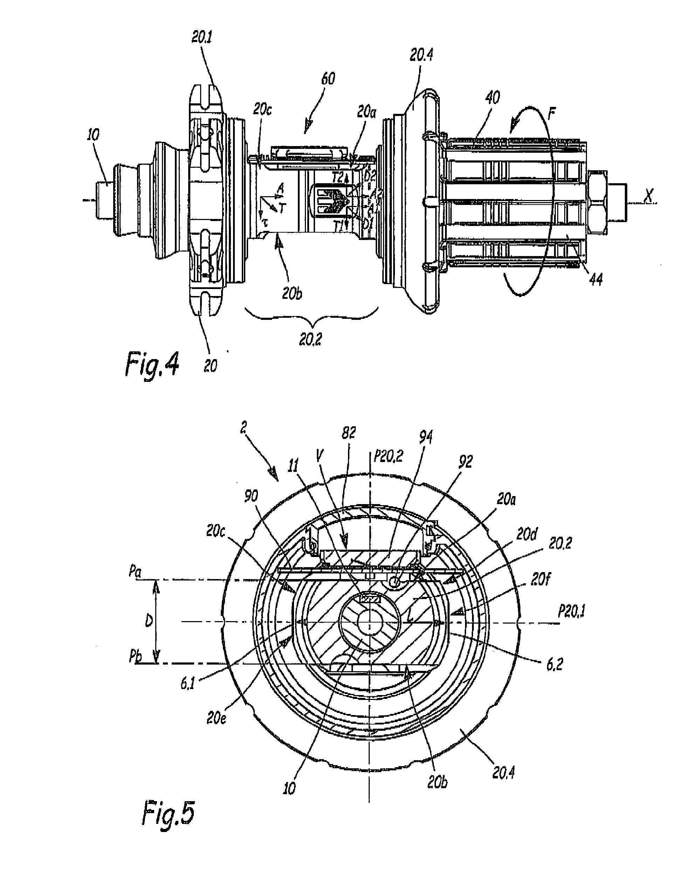

La géométrie de la partie centrale 20.2 du moyeu 20 est globalement celle d'un cylindre à section circulaire tronqué par deux plans Pa et Pb parallèles entre eux et à l'axe X, ainsi que cela ressort de la figure 5. La partie centrale 20.2 du corps de moyeu 20 est globalement symétrique par rapport à deux plans médians P20.1 et P20.2 qui sont perpendiculaires entre eux et passent par l'axe X. Le plan P20.1 est parallèle aux plans Pa et Pb et est situé entre ces plans. Ainsi, la mesure réalisée par le pont de jauge est indépendante des moments de flexion et de l'effort normal.

La section de la partie centrale 20.2 du moyeu 20 est globalement rectangulaire et comporte deux grands méplats 20a et 20b qui sont définis par les plans Pa et Pb et forment les côtés de grande dimension de la section rectangulaire.

Les côtés de petite dimension de la section rectangulaire sont formés par deux faces 20c et 20d légèrement convexes de la partie centrale 20.2 du corps de moyeu 20. Les faces 20c et 20d comportent chacune un petit méplat 20e et 20f sur lequel sont collées les Jauges 6.1 et 6.2.

La distance D entre les grands méplats 20a et 20b, c'est-à-dire la longueur des côtés de petite dimension de la section rectangulaire, est strictement inférieure à la largeur maximale L de la section transversale de la partie centrale 20.2 du moyeu 20, mesurée entre les faces 20c et 20d.

Le corps de moyeu 20 comporte une partie 20.5 de réception d'un corps de roue-libre 40, qui prolonge la partie 20.3 du côté de l'écrou 14.

Un joint à lèvres 5 est intercalé axialement entre le corps de roue-libre 40 et le flasque menant 20.4 pour empêcher les saletés extérieures de pénétrer dans le moyeu 2.

Une bague 21 est disposée autour de l'extrémité 20B du corps de moyeu 20 et dépasse de l'extrémité 20B, du côté de l'écrou 14. La bague 21 forme un logement de réception d'un palier à billes 22 intercalé radialement entre l'arbre 10 et la bague 21. Une rondelle 23 sépare axialement les paliers 22 et 24.

Le corps de roue-libre 40 est solidaire de la bague 21 et est monté autour du corps de moyeu 20 et de la bague 21. Un palier lisse 25 est intercalé radialement entre le corps de moyeu 20 et le corps de roue-libre 40, Une bague d'arrêt 42 obture le corps de roue-libre 40, du côté de l'écrou 14. La bague d'arrêt 42 porte un filetage externe qui coopère avec un taraudage ménagé à l'intérieur du corps de roue-libre 40. L'écrou 14 et la bague d'arrêt 42 retiennent axialement les paliers 22 et 24 et le bague 21.

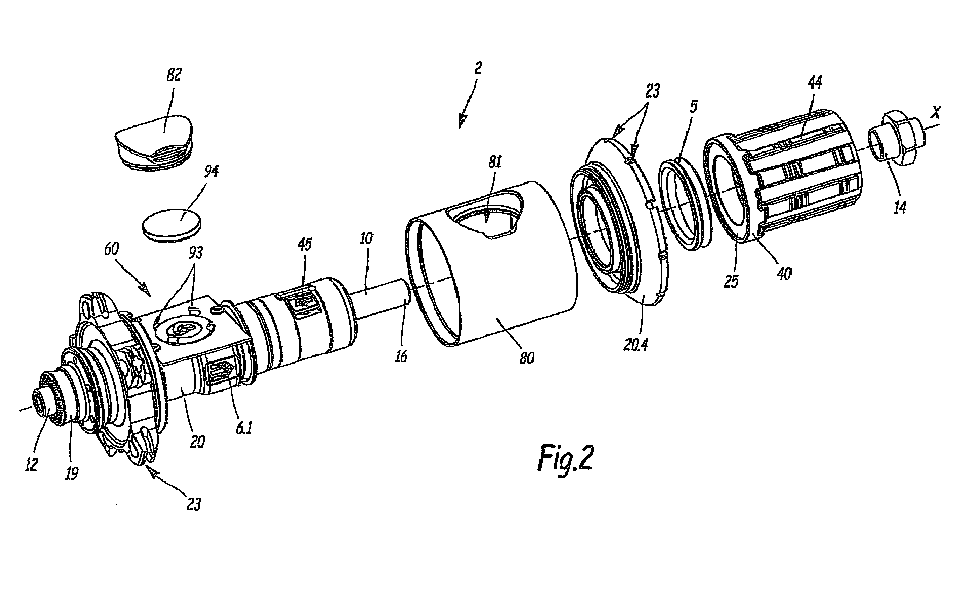

Le corps de roue-libre 40 est pourvu d'une denture Interne 41 et le corps de moyeu 20 est pourvu de cliquets 45, dont l'un est visible à la figure 2, destinés à interagir avec la denture interne 41 du corps de roue-libre 40, pour solidariser sélectivement les corps 20 et 40 lorsque le moyeu 2 est dans une configuration dite de pédalage, dans laquelle le corps de roue-libre 40 est menant par rapport au corps de moyeu 20 car le cycliste exerce un effort d'entraînement en rotation du corps de roue-libre 40, au moyen d'une chaîne non représentée. Les cliquets 45 permettent une rotation unidirectionnelle du corps de moyeu 20 par rapport au corps de roue libre 40 et ne s'opposent pas à la rotation de la roue lorsque le cyclise arrête de pédaler.

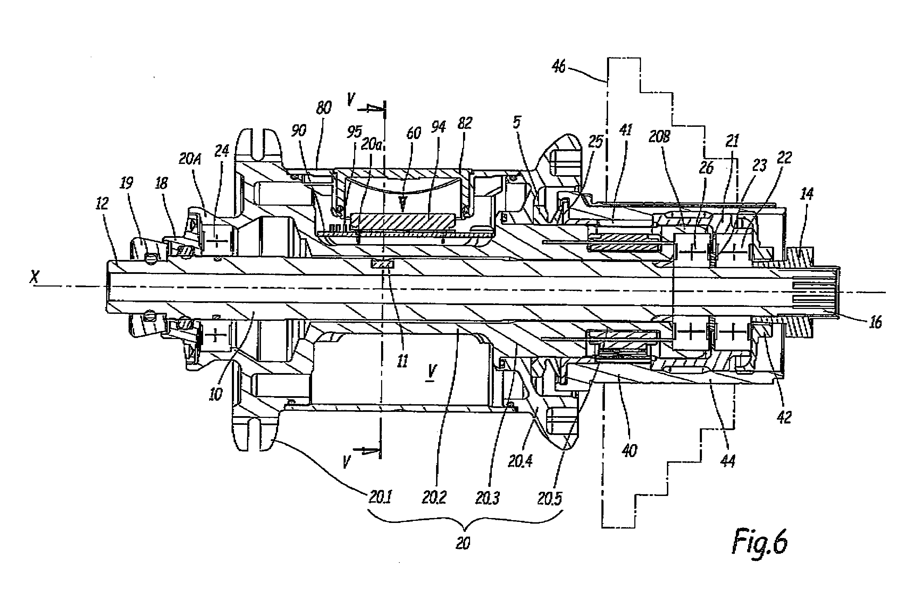

Le corps de roue-libre 40 est pourvu de nervures externes 44 qui forment des reliefs de solidarisation en rotation du corps de roue-libre 40 avec une cassette de pignons 46 représentée à la figure 6, en traits mixtes, par la trace de son enveloppe. Cette cassette de pignons 46 est en prise avec la chaîne non représentée de la bicyclette.

Un système de mesure de puissance 60 est intégré au moyeu 2. Le système 60 comprend des Jauges de déformation 6.1 et 6.2, fixées respectivement sur les faces 20c et 20d de la partie centrale 20.2 du moyeu 2, par exemple par collage. Les jauges 6.1 et 6.2 sont centrées sur le plan P20.1.

De manière avantageuse mais non obligatoire, on choisira des jauges qui possèdent un coefficient ou facteur de jauge élevé, pour obtenir un signal de plus grande amplitude et améliorer ainsi la sensibilité du système de mesure de puissance 60.

De manière connue en soi, la variation relative de la résistance d'une jauge de déformation est proportionnelle, au facteur de Jauge et à la déformation ou variation de longueur relative de la jauge, et donc également à la déformation du corps d'épreuve qui supporte la jauge. Dans le cas d'espèce, le corps d'épreuve est constitué par la partie centrale 20.2 du corps de moyeu 20.

Les Jauges 6.1 et 6.2 sont doubles, c'est-à-dire qu'elles permettent chacune de mesurer la déformation de la partie centrale 20.2 du moyeu 20 selon deux directions D1 et D2 non parallèles visibles à la figure 4. En variante, chaque Jauge 6.1 et 6.2 est remplacée par deux jauges de déformation simples séparées.

Un tube de protection 80 est disposé axialement entre les flasques 20.1 et 20.4. Lors du montage du moyeu 2, le tube 80 est enfilée autour de la partie centrale

20.2 du corps de moyeu 20, puis le flasque côté roue libre 20.4 est monté sur le corps de moyeu 20. Un volume V de réception du système de mesure 60 est défini, le long de l'axe X, entre les flasques 20.1 et 20.4. Selon une direction radiale, le volume V est délimité entre la partie centrale 20.2 du corps de moyeu 20 et le tube 80. Le tube 80 est par exemple fabriqué à partir d'une matière synthétique, sa faible rigidité ne contribue pas à la tenue mécanique du moyeu 2 ni à la transmission de couple parasite entre les flasques 20.1 et 20.4.

Le système de mesure 60 comprend une carte électronique 90 logée dans le volume V. La carte électronique 90 est assemblée sur le méplat 20a de la partie centrale 20.2 du corps de moyeu 20, par exemple au moyen de vis. La carte électronique 90 supporte une cellule 92 de type reed visible à la figure 5, pour la mesure de la vitesse angulaire du moyeu 2 par rapport à l'arbre 10. La cellule reed 92 détecte chaque tour du moyeu 2, autour de l'arbre 10, au moyen d'un aimant 11 disposé dans une entaille ménagée dans l'arbre 10.

De plus, le système de mesure 60 est pourvu d'une batterie 94 de stockage d'énergie électrique qui alimente les Jauges 6.1 et 6.2 et le système de mesure. La batterie 94 est assemblée à la carte électronique 90 au moyen de pattes métalliques flexibles 93 visibles à la figure 2. Le tube 80 comporte une trappe 81 d'accès à la batterie 94, obstruée par un couvercle amovible 82. Ainsi, la batterie 94 peut être retirée et remplacée facilement lorsqu'elle est déchargée.

Le signal de sortie des jauges 6.1 et 6.2 est transmis à la carte électronique 90 par une liaison filaire, non représentée, Afin de limiter la consommation électrique, il est préférable d'alimenter les Jauges 6.1 et 6.2 de manière pulsée en ne les alimentant que quelques dizaines de microsecondes à une fréquence d'échantillonnage supérieure à 40 Hz.

La carte électronique 90 est équipée d'une antenne de transmission 95, visible à la figure 6, qui transmet, par voie aérienne, un signal relatif à la mesure de la puissance, à un ordinateur de bord pouvant être fixé au guidon de la bicyclette. Par exemple, le signal est transmis selon la norme Bluetooth ou ANT+ par ondes radio, de manière à être compatible avec les ordinateurs de bord du commerce. De préférence, le tube 80 est fabriqué dans un matériau tel qu'un matériau synthétique pour ne pas perturber ce signal.

Lorsque le cycliste pédale dans un mouvement moteur, le corps de moyeu 20 se déforme légèrement en torsion, comme représenté par la flèche T à la figure 4. La torsion T comporte une composante circonférentielle correspondant à une contrainte de cisaillement $\tau$ (tau) qui s'exerce notamment à la surface du corps de moyeu 20, en particulier au niveau des faces 20c et 20d sur lesquelles les jauges 6.1 et 6.2 sont collées. La contrainte de cisaillemant $\tau$ induit 2 directions principales de déformations, la première inclinée à +45° et la seconde à -45°.

Ainsi lorsque le cycliste transmet un couple moteur dans le sens de F la jauge 6.1 dont la grille est orientée suivant la direction D1 subit une déformation négative (rétractation) provoquant ainsi une diminution de sa résistance ohmique soit une variation de résistance négative, alors que la jauge 6.1 dont la grille est orientée suivant la direction D2 subit une déformation positive (élongation) provoquant ainsi une augmentation de sa résistance électrique soit une variation de sa résistance positive, il en est de même pour les 2 jauges 6.2 D1 et 6.2 D2, ces 4 jauges résistives sont assemblées électriquement dans un pont complet de Wheastone alimenté de façon pulsée par la carte 90 et la déséquilibre électrique du pont est alors proportionnel au couple transmis par le cycliste. Comme vu ci-dessus les Jauges 6.1 D1 et 6.2 D1 ont leur résistance qui diminue avec le couple alors que les jauges 6.1 D2 et 6.2 D2 ont leur résistance qui augmente avec le couple ainsi les jauges variant dans le même sens seront assemblées, opposées 2 à 2, dans le pont de Wheastone, composant ainsi un pont complet à 4 jauges actives donnant un signal électrique maximal.

Le signal du pont est alors amplifié puis converti numériquement par un convertisseur A/D intégré dans la chaine de mesure 60 Intégrée à la carte électronique 90. Le signal de couple transmis est déterminé en retranchant la valeur de tarage correspondant au déséquilibre du pont en l'absence de couple, ce tarage peut-être réalisé automatiquement à chaque phase de roue libre comme décrit dans le brevet EP 0 391 756.

Une compensation en température peut être appliquée à cet offset de tarage pour tenir compte d'une éventuelle dérive d'offset de la chaîne de mesure entre 2 valeurs de tarage automatique, ce qui peut être le cas lors de longues ascensions de cols sans aucune phase de roue libre, ne permettant aucun recalage de l'offset alors que la température peut évoluer notablement avec l'altitude ou les conditions climatiques.

La valeur de couple transmis est enfin déduite en multipliant le signal de couple ci-dessus par une constante de calibration déterminée lors de la phase d'étalonnage réalisée sur une roue complète. Cette constante de calibration peut être corrigée en température en appliquant une loi de variation du coefficient de calibration en fonction de la température, cette loi est de préférence déterminée pour chaque capteur lors de la phase d'étalonnage ou peut être plus simplement appliquée de manière systématique à tous les capteurs à partir d'essais réalisés en laboratoire. Cette correction du facteur de calibration permet de tenir compte de la variation du module d'élasticité du corps d'épreuve avec la température, de la variation de facteur de jauge avec la température et des dérives éventuelles de gain des amplificateurs de la carte électronique 90. Les composantes axiales A1 et A2 des jauges permettent de mesurer la compression de la partie centrale du corps de moyeu.

Comme expliqué plus en détail par la suite, l'étalonnage tient compte des rigidités des éléments qui composent la roue 1.

La partie centrale 20.2 du corps de moyeu 20 est dimensionnée pour que la déformation des jauges 6.1 et 6.2 soit limitée, pour permettre aux jauges 6.1 et 6.2 de résister aux sollicitations cycliques de fatigue.

Lorsque le cyclise pédale dans un mouvement moteur, les cliquets 45 solidarisent en rotation le corps de roue-libre 40 avec le corps de moyeu 20, et le corps de moyeu 20 est entraîné en rotation autour de l'axe X. Le couple d'entrainement transite entre les flasques 20.1 et 20.4 par un premier chemin passant par la nappe de rayons côté roue libre 4b et la jante 3, d'une part, et par un deuxième chemin passant par la partie centrale 20.2 du corps de moyeu 20 et la nappe côté opposée roue libre 4a, d'autre part. La répartition du couple d'entrainement entre le premier chemin et le deuxième chemin se calcule à partir des rigidités en torsion, exprimées en Nm/degré, des éléments qui composent la roue 1, à savoir notamment le corps de moyeu 20, la jante 3, le pneumatique et les nappes de rayons 4a et 4b. Cette rigidité en torsion est notamment dépendante de l'angle que font les rayons avec une direction radiale. Dans l'exemple représenté sur les figures, les rayons côté roue libre sont orientés exactement radialement, le couple passant par la nappe côté roue libre 4b est égal à environ 7% du couple total d'entrainement de la roue 1, En revanche le couple passant par le moyeu et par la nappe opposée roue libre 4a est égal à environ 93% du couple total d'entraînement.

Dans la solution de l'invention, comme la mesure du couple se fait directement sur le corps de moyeu lui-même, il n'est pas possible de prendre en compte par la mesure la proportion du couple qui passe par la nappe côté roue libre. Par conséquent, on ne mesure pas par le système de mesure la totalité du couple transmis par les pignons arrière à la jante, mais seulement une proportion de celui-ci qui est notamment inférieure à 99%, de préférence inférieure à 98%. D'autre part, pour que la mesure soit pertinente, il faut concevoir la roue de telle manière qu'une proportion non-négligeable du couple transite par le corps de moyeu et la nappe opposée roue libre.

De préférence, on conçoit la roue pour que le couple passant par le moyeu 2 soit compris entre 40% et 98% du couple total d'entrainement de la roue 1, de préférence encore compris entre 90% et 96%.

Compte tenu de l'orientation des rayons des nappes 4a et 4b, le pourcentage du couple d'entrainement passant par la nappe côté roue libre 4b est faible, par exemple de l'ordre de 6% du couple d'entrainement. L'assemblage par frettage du flasque côté roue libre 20.4 au corps de moyeu 20 permet la transmission de ce faible couple, par adhérence, un collage pourrait aussi convenir.

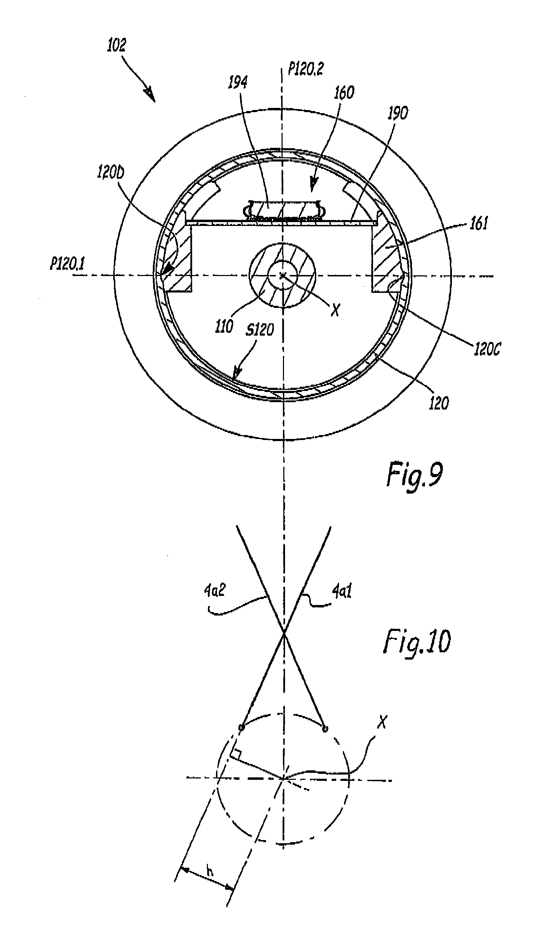

La figure 10 représente schématiquement deux des rayons croisés de la nappe opposée roue libre de la roue selon le premier et le deuxième mode de réalisation de l'invention. Le cercle en trait pointillé représente le cercle de positionnement des accroches de rayon par rapport à l'axe X de la roue. La distance h correspond à la distance que fait le rayon avec l'axe. De manière général, cette distance h varie entre 0, lorsque les rayons sont strictement radiaux, ce qui est le cas pour la nappe côté roue libre 4b, et une valeur correspondant au rayon du cercle de positionnement des accroches de rayon, lorsque les rayons sont tangents.

Dans les deux modes de réalisation représentés, la valeur h est nulle pour la nappe côté roue libre tandis qu'elle vaut 25,8 mm pour les rayons des nappes côté opposée roue libre. Cette configuration aboutit à une proportion du couple d'entraînement passant par le corps du moyeu, et donc mesurée par le système de mesure, environ égale à 93 %.

D'autres configurations sont possibles sans sortir du cadre de l'invention, Dans un mode de réalisation alternatif non représenté, les rayons de la nappe roue libre sont croisés à un, c'est-à-dire que les rayons sont régulièrement répartis et se croisent une seule fois deux à deux, tandis que leurs accroches au niveau de la jante sont régulièrement réparties et que la nappe opposée à la roue libre est elle croisée à deux comme sur la roue représentée à la figure 1. Dans ce cas, la valeur h pour les rayons de la nappe roue libre est sensiblement égale à 16 mm, tandis que celle des rayons de la nappe opposée roue libre est égale à 26 mm soit un ratio 16/26 = 61%. Dans ce mode alternatif, la proportion du couple d'entraînement passant par le corps de moyeu et mesuré par le système de mesure est environ égale à 50%. Dans ce cas, la section du corps de moyeu faisant office de corps d'épreuve sur lequel sont collées les jauges doit être redimensionnée pour atteindre un bon niveau de sensibilité du capteur.

De manière générale, lorsqu'on utilise le moyeu de l'invention pour une roue à rayons, cette roue est construite de telle manière que les rayons côté roue libre ont une distance à l'axe de la roue "h" qui est inférieure à 16 mm et les rayons de la nappe opposée roue libre ont une distance à l'axe "h" supérieure à 15 mm et un ratio entre ces deux cotes inférieur à 65%. Ainsi, on s'assure que la proportion du couple transmis qui transite par la nappe côté opposé roue libre, et par conséquent par la partie centrale du corps de moyeu est satisfaisante pour en réaliser la mesure, et le calcul par extrapolation du couple total transmis à la jante.

La carte électronique 90 calcule la puissance motrice de la roue 1 en multipliant la vitesse angulaire du moyeu 2 par la mesure du couple d'entraînement fournie par les jauges 6.1 et 6.2. En d'autres termes, en étant équipé de la cellule reed 92, le moyeu 2 constitue un système de mesure de la puissance d'entrainement de la roue 1.

Lorsque la roue 1 est soumise à un effort latéral, le corps de moyeu 20 se déforme légèrement en flexion. Ces déformations en flexion ne sont pas liées au couple d'entrainement fourni par le cycliste. Par conséquent, elles tendent à perturber les mesures. Les jauges 6.1 et 6.2 sont décalées angulairement de 180° par rapport à l'axe X. De plus, la partie centrale 20.2 du corps de moyeu 20 est symétrique par rapport aux plans P20.1 et P20.2. Cette géométrie permet de symétriser les déformations de flexion et tend à annuler leur mesure, compte tenu du montage en pont de Wheatstone.

De même le corps de moyeu peut-être soumis à un effort axial mais les symétries géométriques associées à la symétrie du pont de Wheastone permettent de rendre la mesure indépendante de cet effort axial parasite.

De manière avantageuse, lorsque la roue 1 est en roue libre, on règle l'offset des jauges 6.1 et 6.2 à zéro pour annuler le déséquilibrage du pont de Wheatstone dû aux écarts de résistance de ses jauges 6.1 et 6.2 et pour annuler également les déséquilibres de toute la chaîne d'amplification et de traitement du signal.

Le système de mesure 60 détecte automatiquement les phases de roue libre en étudiant les variations instantanées du couple. En effet, au cours d'un cycle de pédalage, le couple transmis par le cycliste passe par deux maximums, correspondant aux positions où les manivelles de pédalier droite et gauche font un angle de 60° avec la verticale, et deux minimums, lorsque l'une des manivelles est en position basse. La mesure du couple fournie par les jauges 6.1 et 6.2 détecte ces modulations. Lorsqu'il n'y a plus de modulation, le système de mesure 60 déduit que le cycle est en roue libre. Il peut alors procéder à l'offset.

Dans une étape préalable à l'utilisation du cycle, le système de mesure 60 est étalonné afin d'obtenir une relation entre les signaux de sortie des jauges 6.1 et 6.2 et le couple d'entrainement fourni par le cycliste au pédalage. Lors de cet étalonnage, la roue 1 est montée, c'est-à-dire qu'elle comporte le moyeu 2, l'axe central 10, les nappes de rayons 4a et 4b, la jante et le pneumatique. Le pneumatique est gonflé à sa pression d'utilisation, afin d'approcher au mieux le comportement mécanique de la roue 1 lors de son utilisation. Un générateur de couple est assemblé au moyeu 2 et l'entraine en rotation, tandis que la jante 3 est immobilisée. L'étalonnage consiste à réaliser une série de tests dans lesquels on fait varier le couple d'entrainement fourni par le générateur de couple, en relevant les signaux de sortie des jauges 6.1 et 6.2. Pour tenir compte d'une éventuelle hystérèse il est préférable de réaliser un étalonnage en faisant croitre le couple puis en le faisant décroitre afin de tenir compte de cette hystérèse éventuelle.

Cet étalonnage permet de tenir compte de la rigidité globale de la roue 1, en particulier de la rigidité des nappes de rayons 4a et 4b, et peut être effectué pour chaque roue 1 conforme à l'invention en sortie d'usine. Ainsi, l'invention ne se limite pas à un type de rayonnage particulier. La roue 1 comporte des rayons croisés 4a1 et 4a2 formant la nappe opposée roue libre 4a et des rayons radiaux formant la nappe roue libre 4b. Toutefois, dans le cadre de l'invention, le montage des rayons peut être différent, dans la mesure où l'étalonnage tient compte de la rigidité de chaque nappe.

De manière optionnelle, le système de mesure 60 est équipé d'un capteur de température, par exemple rapporté sur le corps de moyeu 20. Le module d'Young des éléments qui composent la roue 1 est influencé par les variations de température et a un impact sur la rigidité des éléments, et donc également sur le couple d'entrainement mesuré. La variation de la température influence ainsi la tension des rayons, ainsi que le facteur de jauge et le gain de l'amplificateur de la chaîne de mesure 60.

La mesure de température permet à la carte électronique 90 de compenser les variations de température. Pour cela, il est nécessaire, lors de l'étalonnage, d'effectuer des tests dans lesquels on mesure les variations du couple d'entrainement en fonction de la température. On a la relation: $C = K . \dfrac{\Delta E}{E} . f(\theta)$, avec C le couple d'entrainement, K la constante de raideur de la roue 1, $\dfrac{\Delta E}{E}$ la variation de tension relative mesurée par le pont de Wheastone composé des 4 jauges 6.1 D1 / 6.1 D2 / 6.2 D1 / 6.2 D2 et $f(\theta)$ la loi de correction en fonction de la température θ. Par exemple, la loi $f(\theta)$ est un polynôme de degré quatre.

Le moyeu 2 est léger et peu coûteux car le corps de moyeu 20 est principalement monobloc. En ce qui concerne la mesure du couple, il n'intègre pas de pièces mécaniques supplémentaires qui ne seraient utiles que pour la mesure du couple, et notamment pas de pièces mécaniques mobiles, ce qui améliore sa fiabilité et la précision de la mesure du couple et de la puissance. La seule pièce supplémentaire n'est pas une pièce mécanique à proprement parler car il s'agit de la carte électronique. De plus, il n'est pas nécessaire de prévoir une pièce supplémentaire pour fixer les jauges de déformation 6.1 et 6.2 puisqu'elles sont fixées au corps de moyeu 20 directement. Enfin, il n'est pas nécessaire d'intégrer un roulement à billes ou un palier pour isoler le corps d'épreuve du capteur en rotation, c'est la structure même de la roue rayonnée qui remplit ainsi cette fonction.

Dans un autre mode de réalisation, non représenté, le moyeu 2 n'est pas équipé de l'organe de mesure 92 de la vitesse angulaire du moyeu 2. Dans ce cas, le moyeu ne constitue pas un système de mesure de puissance mais seulement un moyeu de mesure de couple. Toutefois, avec un tel moyeu de mesure de couple, il est possible d'obtenir une mesure de la puissance d'entrainement de la roue en déterminant sa vitesse angulaire par des moyens appropriés qui, par exemple, sont placés sur une autre roue du cycle ou par mesure GPS. Dans ce cas, il est envisageable d'équiper le cycle d'un module de calcul, par exemple intégré à l'ordinateur de bord, pour le calcul de la puissance à partir de la mesure du couple, fournie par le moyeu 2, et de la mesure de la vitesse angulaire.

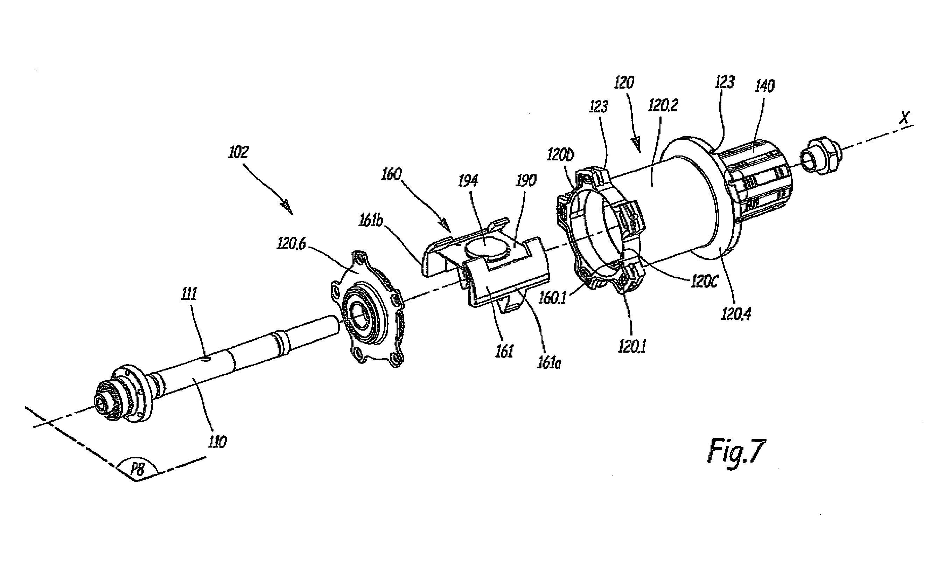

Les figures 7 à 9 montrent un moyeu 102 conforme à un deuxième mode de réalisation de l'invention, dans lequel les éléments semblables à ceux du moyeu 2 portent les mêmes références numériques augmentées de 100. Le moyeu 102 est prévu pour être monté sur une roue de cycle telle que la roue 1.

Le moyeu 102 se distingue du moyeu 2 par la géométrie de son corps de moyeu 120. Dans la suite, on ne décrit pas en détail les éléments du moyeu 102 similaires à ceux du moyeu 2.

Le corps de moyeu 120 s'étend autour d'un arbre creux 110 s'étendant lui-même le long d'un axe X. Le corps de moyeu 120 comprend une partie centrale 120.2 tubulaire et creuse, délimitée de part et d'autre par un flasque 120.1 ou 120.4. Contrairement au moyeu 2, les deux flasques 120.1 et 120.2 du corps de moyeu 120 sont monoblocs avec la partie centrale 120.2, c'est-à-dire formés d'une seule pièce avec la partie centrale 120.2, par exemple par usinage d'un bloc de matière. Chaque flasque 120.1 et 120.2 comporte des moyens 123 de fixation des rayons.

Deux paliers à billes 124 et 126 sont intercalés radialement entre l'arbre creux 110 et le corps de moyeu 120. Du côté du flasque 120.1, un couvercle 120.6 referme un volume intérieur V délimité à l'intérieur de la partie centrale 120.2 du corps de moyeu 120. Le couvercle 120.6 est assemblée au corps de moyeu 120 au moyen de vis qui coopèrent avec le flasque 120.1.

Le corps de moyeu 120 comporte une partie 120.5 de réception d'un corps de roue-libre 140. La partie 120.5 prolonge le flasque 120.4, à l'opposé de l'autre flasque 120.1.

Un système de mesure 160 de la puissance de la roue 1 est logé dans le volume V. Le système de mesure 160 comprend un support 161 réalisé notamment à partir d'un matériau synthétique. La forme extérieure du support 161 est globalement cylindrique et présente deux nervures longitudinales 161a et 161b qui coopèrent avec deux rails 120C et 120D ménagés dans la surface intérieure de la partie centrale 120.2 du corps de moyeu 120, de manière à bloquer la rotation du support 161 par rapport au corps de moyeu 120. Le support 161 est amovible. Le démontage du couvercle 120.6 en dévissant les cinq vis (non représentées) permet d'accéder au volume intérieur V,

Ce deuxième mode de réalisation permet par exemple de proposer des roues prééquipées de jauges et sans le kit électronique d'adaptation, lequel peut être proposé en option et intégré ultérieurement en démontant l'arbre 110, le couvercle 120.6, en connectant la carte électronique 190 aux jauges pré-équipées, en introduisant le système de mesure 160 dans le corps de moyeu, en refermant le couvercle 120.6 et en réassemblant l'arbre 110. L'installation du kit électronique peut se faire sans démonter complètement la roue. Dans cette version il est avantageux d'avoir réalisé un premier étalonnage initial du pont de Wheastone et d'intégrer un composant électronique permettant de mémoriser son facteur de calibration, ainsi la calibration du capteur sera reconnue automatiquement lors de l'initialisation du système de mesure.

Ce deuxième mode de réalisation permet aussi d'accéder de façon simple, étanche et robuste au compartiment de la pile, il suffit pour cela de démonter l'arbre 110 et d'ouvrir le couvercle 120.6 pour accéder à la pile.

Le support 161 supporte une carte électronique 190 qui supporte une cellule reed 192 et une batterie 194. L'arbre creux 110 comporte un aimant 111 détecté par la cellule reed 192.

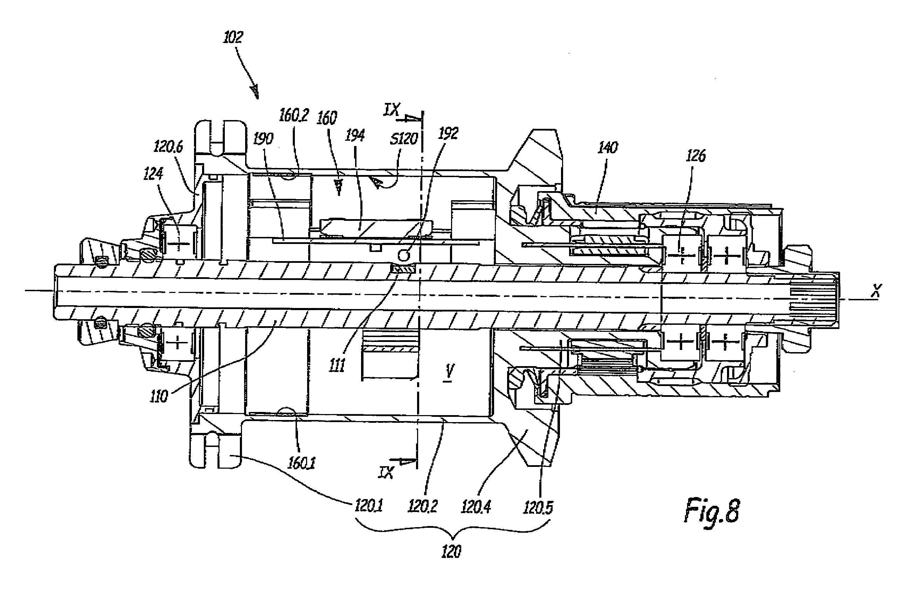

Deux paires de jauges de déformation 106.1 et 106.2 visibles à la figure 8 sont fixées sur la surface intérieure S120 de la partie centrale 120.2 du corps de moyeu 120, au voisinage du flasque 120.1.

Le corps de moyeu 120 présente globalement une symétrie de révolution autour de l'axe X. En particulier, la partie centrale 120.2 est symétrique par rapport à deux plans P120.1 et P120.2 passant par l'axe X et perpendiculaires entre eux. Le plan P120.2 passe par les jauges 106.1 et 106.2. Les jauges 106.1 et 106.2 sont décalées angulairement de 180° par rapport à l'axe X.

La forme creuse de la partie centrale 120.2 du corps de moyeu 120 lui confère une plus grande raideur et plus de légèreté.

Le fonctionnement du moyeu 102 pour la mesure du couple et de la puissance d'entrainement de la roue est similaire au fonctionnement du moyeu 2.

L'invention a été décrite en référence à une roue 1 de bicyclette, mais elle s'applique également à toutes les roues de cycles.

En outre, les différents modes de réalisation et variantes décrits ci-dessus peuvent être combinés entre eux, partiellement ou totalement, pour donner lieu à d'autres modes de réalisation de l'invention.

**Revendications**

1. Moyeu (2; 102) de mesure du couple d'entrainement d'une roue (1) de cycle, comprenant:

    - un arbre central (10 ; 110) définissant un axe de rotation (X) de la roue,
    - un corps de moyeu (20 ; 120) monté libre en rotation autour de l'arbre (10 ; 110),

    le corps de moyeu (20 ; 120) comportant une partie centrale (20.2 ; 120.2) bordée de part et d'autre par des zones d'ancrage de moyens (23 ; 123) de fixation d'au moins un élément de liaison (4a1, 4a2) reliant le corps de moyeu (20 ; 120) à une jante (3) de la roue (1), **caractérisé en ce que** le moyeu comprend un système de mesure (60 ; 160) du couple d'entrainement de la roue (1) incluant des jauges de déformation (6.1, 6.2 ; 106.1, 106.2) fixées sur le corps de moyeu (20 ; 120).

2. Moyeu (2, 102) selon la revendication 1, **caractérisé en ce que** ledit système de mesure (60, 160) du couple d'entrainement n'en mesure qu'une proportion comprise entre 40% et 98%.

3. Moyeu (2 ; 102) selon l'une des revendications précédentes, **caractérisé en ce que** les jauges de déformation (6.1, 6.2 ; 106.1, 106.2) sont fixées sur la partie centrale (20.2 ; 120.2) du corps de moyeu (20 ; 120).

4. Moyeu selon l'une des revendications précédentes, **caractérisée en ce que** chacune des deux zones d'ancrage est constituée par un flasque (20.1, 120.1) qui s'étend radialement depuis le corps de moyeu.

5. Moyeu (2 ; 102) selon l'une des revendications précédentes, **caractérisé en ce que** la partie centrale (20.2 ; 120.2) du corps de moyeu (20 ; 120) a une section transversale globalement symétrique par rapport à deux plans longitudinaux perpendiculaires (P21.1, P20.2 ; P120.1, P120.2).

6. Moyeu (2; 102) selon l'une des revendications précédentes, **caractérisé en ce qu'**au moins deux jauges de déformation (6.1, 6.2; 106.1, 106.2) sont décalées angulairement de 180° par rapport à l'axe (X).

7. Moyeu (2) selon l'une des revendications précédentes, **caractérisé en ce que** la partie centrale (20.2) du corps de moyeu (20) présente une section transversale globalement rectangulaire.

8. Moyeu (2) selon les revendications 1 à 7 prises ensemble, **caractérisé en ce que** les deux jauges de déformation (6.1, 6.2) sont fixées sur les faces de petite dimension (20c, 20d) de la partie centrale (20.2) du corps de moyeu (20).

9. Moyeu (2) selon l'une des revendications 4 à 8 précédentes, **caractérisé en ce qu'**il comporte un élément de protection (80) tubulaire disposé entre les flasques (20.1, 20.4), autour de la partie centrale (20.2) du corps de moyeu (20), et délimitant un volume (V) de réception du système de mesure (60).

10. Moyeu (102) selon l'une des revendications 1 à 6, **caractérisé en ce que** la partie centrale (120.2) du corps de moyeu (120) est creuse et délimite un volume (V) de réception du système de mesure (160).

11. Moyeu (102) selon la revendication 10, **caractérisé en ce que** les jauges de déformation (106.1, 106.2) sont fixées sur la surface intérieure (S120) de la partie centrale (120.2) du corps de moyeu (120).

12. Moyeu (2 ; 102) selon l'une des revendications précédentes, **caractérisé en ce que** le corps de moyeu (20 ; 120) ne comporte pas de partie mobile.

**13.** Système de mesure de la puissance d'entrainement d'une roue de cycle, **caractérisé en ce qu'**il comprend un moyeu (2 ; 102) de mesure de couple selon l'une des revendications 1 à 10 équipé d'un organe (92 ; 192) de mesure de la vitesse angulaire du corps de moyeu (20 ; 120) par rapport à l'arbre central (10 ; 110).

**14.** Roue (1) de cycle, **caractérisée en ce qu'**elle comprend un moyeu (2 ; 102) selon l'une des revendications 1 à 12 ou un système selon la revendication 13.

**15.** Méthode de mesure au moyen d'un moyeu (2 ; 102) selon l'une des revendications 1 à 12 ou d'un système selon la revendication 13, **caractérisée en ce qu'**elle comprend une étape d'étalonnage préalable à l'utilisation du cycle, dans laquelle une série de tests est effectuée à l'aide d'un générateur de couple entrainant le moyeu (2 ; 102), la jante (3) étant immobilisée, afin d'obtenir une relation entre les signaux de sortie des Jauges de déformation (6.1, 6.2 ; 106.1, 106.2) et le couple d'entrainement de la roue (1).

**16.** Méthode selon la revendication 15, **caractérisée en ce que** lors de l'étalonnage, le moyeu (2, 102) est assemblé à la jante (3) et un pneumatique gonflé est monté sur la jante (3).

**17.** Méthode de mesure selon l'une des revendications 15 ou 16 au moyen d'un moyeu (2 ; 102) équipé d'un capteur de température, **caractérisée en ce que** lors de l'étalonnage, une série de tests est effectuée afin d'établir une relation entre les variations de température et le couple d'entrainement de la roue (1).

Fig.1

*Fig.2*

EP 2 757 358 A2

Fig.3

Fig.4

Fig.5

EP 2 757 358 A2

Fig.6

15

Fig.7

Fig.8

Fig.9

Fig.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0841549 A
- EP 1082592 A
- EP 0391756 A